# EUROPEAN PATENT APPLICATION

(11) **EP 4 616 717 A1**
(43) Date of publication of application: **17.09.2025**
(21) Application number: 25157381.2
(22) Date of filing: 12.02.2025
(51) Int. Cl.: A23C 9/152, A23C 11/02, A23L 11/60

(54) **DAIRY PRODUCT FOR HUMAN CONSUMPTION AND METHOD FOR MANUFACTURING SUCH A DAIRY PRODUCT**

(30) Priority: 01.03.2024 NL 2037160
(71) Applicant: Bob Holding B.V., 5266 AR Cromvoirt (NL)
(72) Inventor: van de Meerendonk, Robertus Carolus Maria, Cromvoirt (NL)
(74) Representative: Dekker-Garms, Alwine Emilie

(57) **Abstract**

A dairy product for human consumption comprises a mixture of animal milk and plant-based milk from sorghum flour, in a ratio between 2 : 3 and 3 : 2. The taste and the mouth-feel of such a mixture are surprisingly similar to those of pure animal milk (products), and the overall composition is very advantageous in the human diet. However, the ground areal required for the animal feed is clearly smaller, and also the emission from dairy animals for the same quantity of dairy product is much smaller.

## Description

The present invention relates to a dairy product for human consumption, particularly a drink resembling milk from a dairy animal.

Milk from dairy animals, such as cow's milk, is important nourishment for human beings. It comprises many nutrients in an advantageous proportion. The taste is also appreciated by many as pleasant, and it is possible to make other dairy products on the basis of such milk, such as yogurt.

However, it has appeared to be desirable to reduce the consumption of animal products, because producing animal feed for the dairy animals takes too much space and the emission of hazardous gases causes severe climate change. For those reasons, there has been a search for alternatives for animal milk (products). Many alternatives are known by now, such as soy milk and oat milk.

The known alternatives are disadvantageous in that they are very different from milk (products) from dairy animals, such as cow's milk, often in a negative sense. Not only are the taste and the mouth-feel often indicated as being "not nice" and are the alternative drinks often strongly sweetened, but also the composition of the alternative milk is less advantageous than the composition of the milk from dairy animals, and the first-mentioned is a less complete part of the human diet. Besides, the environmental gain in a transition from grazed area to agriculture for growing the crop for the plant-based milk is limited.

It is in a mixture of animal and plant-based milk that the best of both worlds can be combined. Such mixtures of animal and plant-based milk are known per se, such as from US2024/0049747 A1. In order to prevent demixing of the components in the mixture, this document prescribes use of ultra shear technology (UST) for homogenisation, with pressures between 140 and 6,000 bar. Besides, there is no indication whatsoever of an optimal choice in respect of the 45 types of plant-based material for milk described in the document, such as a choice in view of durability.

In view of the foregoing, it is an object of the present invention to provide a dairy product which combines the advantageous features of milk from dairy animals with reducing the disadvantageous features thereof, and which enables a more durable production chain.

The invention achieves this object with a dairy product according to claim 1.

The invention is based on the insight that out of the known plant materials, sorghum has a very advantageous combination of features. For instance, the basic taste of pure sorghum milk is more similar to the taste of animal milk than the basic taste of many other plant-based milk types like oat milk and almond milk, which are mostly sweetened, possibly strongly sweetened.

A big advantage of sorghum is that it is suitable for growth on poor soil and still has a yield of dry matter which is at least as high as said yield of grass. Therefore, growing sorghum competes a lot less with growing high-class crops which are directly suitable for human consumption, such as wheats and vegetables. Further, it is well resistant against heat and drought, while huge amounts of water are needed in growing almonds, for example. Also, sorghum fixates a lot of carbon in the ground. Further, there is a lot less animal emission in the form of CO₂, nitrogen, methane and manure, because no more than 40-60% animal milk is needed for a similar quantity of dairy product, and less animals are needed for making the dairy product. Hence, the dairy product according to the invention involves a lot less environmental impact.

Besides, it is important that the composition of sorghum milk, especially de amino acid composition, is partly complementary to the composition of animal milk. The fact is that sorghum comprises more of the essential amino acid called cysteine, and also of alanine and leucine. For this reason, it is the milk mixture according to the invention which can constitute very important nourishment for human beings.

A net result of having the plant-based milk part is a reduction of the animal feed areal, because there is no need for additional feed conversion in the dairy animal. Also, the residual product from the sorghum seed growth, namely the plant remains, in itself appears to be a suitable animal feed for the dairy animals. In this way, the latter can additionally produce (a part of) the animal milk on the basis of the residual product from the sorghum growth. The dairy product according to the invention also appears to be relatively stable and it demixes to a lesser extent, without a need of homogenising it at very high pressures.

Further, as known per se, the milk fat of the animal milk fat part, which is comparable to the fat content in semi-skimmed milk, can bring about pleasant organoleptic qualities in the dairy product, such as a taste which is nice and which surprisingly strongly resembles the taste of pure milk, as well as a comparably pleasant mouth-feel, because the milk fat stays for some time in the mouth and on the tongue.

The dairy product can be pasteurised and homogenised if so desired, such as to prevent creaming of the milk fat, which contributes to a long-lasting pleasant mouth-feel. Homogenising is also advantageous for the qualities of the plant-based milk part.

In the dairy product according to the invention, the animal milk is provided in a volume part of 40-60%. This part is somewhat dependent on the composition and the content of milk fat, and of course on the desires in respect of taste of the final drink. The plant-based milk part in the mixture in the dairy product is 60-40% of the volume. Thus, according to the invention it is possible that it comprises 50% animal milk and 50% plant-based milk. However, it is also possible that other ingredients have been added to the dairy product, such as flavourings, e.g., fruit juice, for obtaining a certain desired other taste than a pure milk taste.

Special embodiments of the invention are described in the dependent claims, and also in the following part of the description.

In embodiments the sorghum flour originates from white sorghum, being one or more specific cultivars of sorghum having a white seed coat. Sorghum is wheat of the Big sorgo, *Sorghum bicolor.* In this respect, many cultivars are known, each of those having specific features, such as for the extraction of sugarbloom moisture or even manufacture of brooms with the remaining stalks. Besides the above-mentioned advantages, white sorghum also has the advantage that the white colour of the milk made with it matches the colour of animal milk well. Thus, there is no need for using colorants for colouring the mixture like animal milk. Other types of sorghum, such as 'brown' sorghum, having a dark-coloured seed coat, do not have that advantage, or to a much lesser extent.

In embodiments said animal milk is or comprises cow's milk. Cow's milk is the most produced and drunk animal milk, and is also very much suitable to be mixed with a plant-based milk to provide a dairy product according to the invention. Nevertheless, the invention is also applicable to a milk mixture of plant-based milk with milk from another dairy animal, such as buffalo's milk or goat's milk. The composition of the mixed milk can be determined by taking into account the specific features of an applied type of animal milk, including fat types and fat contents.

The dairy product is the mixture as such, for example, in other words, the mixed milk without further additions. However, in embodiments said dairy product comprises 0.1 - 3 mass-% added milk protein. In that way, a dairy product such as a milk drink is obtained which better resembles whole milk as far as protein quantity is concerned. Thus, in this embodiment the dairy product is suitable as cappuccino milk, due to the better foaming character. In particular, the milk protein comprises whey protein, which is a side product of the cheese industry.

In other embodiments the dairy product according to the invention is fermented by means of one or more yogurt cultures. Thus, a yogurt or yogurt drink is obtained with in itself comparable advantages as the milk-resembling dairy product.

The invention also relates to a method for manufacturing a dairy product for human consumption, comprising providing an animal milk from a dairy animal, providing a plant-based milk from sorghum flour, and combining the animal milk and the plant-based milk to a mixture, in a ratio of 3 : 2 to 2 : 3.

The advantages of the method are largely similar to those for the dairy product according to the invention and do not need to be repeated. However, it is mentioned in particular that for the purpose of the production of the sorghum flour less area is needed than for the purpose of the production of a quantity of animal feed which is needed to produce the same quantity of sorghum milk. Besides, the remains of the sorgo (the "sorghum plant"), such as the ears and stalks, are applied as animal feed, and even as biomass or as broom material.

The method can further be complemented with steps known per se, such as pasteurising and homogenising. These steps can be performed separately for the animal milk and the plant-based milk, but it is also possible to mix both types in raw condition and subsequently homogenise those as a mixture. In the process, homogenising can take place at the usual pressures, such as around 180 bar.

In embodiments of the method said sorghum flour originates from white sorghum, being one or more specific cultivars of sorghum having a white seed coat.

Advantageously, said animal milk is or comprises cow's milk, because of the advantageous features of cow's milk. However, also in this respect other types of animal milk are possible, such as goat's milk.

In embodiment the method further comprises the step of enabling the mixture to ferment by means of added yogurt culture. Alternatively, the animal milk is fermented to a yogurt by means of a yogurt culture prior to said step of mixing. In the process, the yogurt cultures which are well known for animal milk can be used, particularly various types of lactic acid bacteria.

In an exemplary embodiment a sorghum milk is made by soaking flour of white sorghum at approximately 75°C for releasing the starch granules. Subsequently, the temperature is lowered to 60°C, after which first enzymes are added for the gelatinisation (conversion of starch to dextrin, "liquefaction"), such as Delvo^{®}Plant ALT of DSM. Subsequently, the temperature is raised again, to 70°C, after which second enzymes are added for the conversion of dextrin to sugars ("saccharification"), such as Delvo^{®}Plant GLU/MAL of DSM. Hence, in the process, carbohydrates are decomposed and sugars as well as proteins are released. After that this milk is cooled down. Of course, said temperatures can also be effectively chosen to be different, as well as the enzymes to be used.

In a subsequent step the remains of the starch granules and other coarse parts are filtered out. In particular, a suitable physical separation technique can be applied in the process, such as a separation technique involving separation on the basis of centrifugal force. The sorghum milk thus filtered is now mixed with an equal part of cow's milk. The mixture thus obtained is pasteurised and homogenised at 180 bar and packed in the consumer package.

A possible summary of the invention is as follows. A dairy product for human consumption comprises a mixture of animal milk and plant-based milk from sorghum flour, in a ratio between 2 : 3 and 3 : 2. The taste and the mouth-feel of such a mixture are surprisingly similar to those of pure animal milk (products), and the overall composition is very advantageous in the human diet. However, the ground areal required for the animal feed is clearly smaller, and also the emission from dairy animals for the same quantity of dairy product is much smaller.

## Claims

1. Dairy product for human consumption, comprising a homogenised mixture of 40-60% animal milk from a dairy animal and 40-60% milk on the basis of sorghum flour.

2. Dairy product according to claim 1, wherein the sorghum flour originates from white sorghum, being one or more specific cultivars of sorghum having a white seed coat.

3. Dairy product according to claim 1 or 2, wherein said animal milk is or comprises cow's milk.

4. Dairy product according to any of the preceding claims, further comprising 0.1 - 3 mass-% added milk protein, particularly whey protein.

5. Dairy product according to any of claims 1-3, fermented by means of one or more yogurt cultures.

6. Method for manufacturing a dairy product for human consumption, comprising
- providing an animal milk from a dairy animal,
- providing a plant-based milk from sorghum flour, and
- combining the animal milk and the plant-based milk to a mixture, in a ratio of 3 : 2 to 2 : 3.

7. Method according to claim 6, wherein said sorghum flour originates from white sorghum, being one or more specific cultivars of sorghum having a white seed coat.

8. Method according to claim 6 or 7, wherein said animal milk is or comprises cow's milk.

9. Method according to any of claims 6-8, further comprising the step of enabling the mixture to ferment by means of added yogurt culture.

10. Method according to any of claims 6-8, wherein the animal milk is fermented to a yogurt by means of a yogurt culture prior to said step of mixing.
